# EUROPÄISCHE PATENTSCHRIFT

(11) **EP 1 035 924 B1**
(45) Veröffentlichungstag und Bekanntmachung des Hinweises auf die Patenterteilung: **02.05.2002**
(21) Anmeldenummer: 98954277.4
(22) Anmeldetag: 14.09.1998
(51) Int. Cl.: B04B 9/04, B04B 15/02

(54) **LABORZENTRIFUGE MIT ELEKTROMOTOR MIT STILLSTANDHEIZUNG**
LABORATORY CENTRIFUGE WITH AN ELECTRIC MOTOR HEATED DURING A STOP
CENTRIFUGEUSE DE LABORATOIRE A MOTEUR ELECTRIQUE POURVU D'UN CHAUFFAGE A L'ARRET

(30) Priorität: 05.12.1997 DE 29721563 U
(43) Veröffentlichungstag der Anmeldung: 20.09.2000
(73) Patentinhaber: SIGMA LABORZENTRIFUGEN GmbH, 37520 Osterode (DE)
(72) Erfinder: TÖDTEBERG, Eckhard, D-37520 Osterode (DE)
(74) Vertreter: Sobisch, Peter, Dipl.-Ing.
(86) Internationale Anmeldenummer: EP9805831
(87) Internationale Veröffentlichungsnummer: WO9929431

(56) Entgegenhaltungen:
- EP-A- 0 295 377
- WO-A-90/01372
- DE-A- 4 105 733
- GB-A- 2 150 717
- US-A- 4 195 324
- US-A- 5 631 509

## Beschreibung

Die Erfindung bezieht sich auf eine Laborzentrifuge entsprechend dem Oberbegriff des Anspruchs 1.

Laborzentrifugen, insbesondere für den medizinisch-pharmazeutischen Bereich sind in vielfältiger Form bekannt. Sie bestehen aus einem oberseitig durch einen Deckel verschließbaren Gehäuse, innerhalb welchem ein Zentrifugenrotor, der mit einem Elektroantrieb in Verbindung steht, schwingfähig aufgehängt ist. Der Zentrifugenrotor ist im Umfangsbereich mit mehreren, auswechselbar angeordneten Gefäßen versehen, die zur Aufnahme eines durch Zentrifugation zu behandelnden Stoffgemisches bestimmt sind, wobei dieser Prozeß in Abhängigkeit von den chemisch-physikalischen Eigenschaften des Stoffgemisches unter - bezogen auf den Umgebungszustand - abweichenden Druckund Temperaturverhältnissen durchgeführt werden muß. Dies erfordert im allgemeinen eine besondere Ausbildung des Zentrifugengehäuses, insbesondere die Unterbringung des Zentrifugenrotors innerhalb eines Kessels, dessen Innenraum temperierbar, insbesondere kühlbar ist.

Zur Durchführung einer Zentrifugationsbehandlung unter verminderten Temperaturen wird der Innenraum des genannten Kessels zunächst bei Stillstand des Antriebs bis auf die jeweilige produktspezifische Temperatur abgekühlt, wobei erst nach Erreichen dieser Temperatur die eigentliche Zentrifugationsbehandlung beginnt.

Aus der Fundstelle GB 21 50 717 A ist eine Laborzentrifuge bekannt, die dahingehend eingerichtet ist, daß der Zentrifugationsprozeß unabhängig von der Drehzahl des Rotors nach Maßgabe einer konstanten Temperatur durchgeführt wird. Zu diesem Zweck ist der den Rotor aufnehmende Kessel mit einem Temperatursensor versehen, über den in Verbindung mit einer Regelungseinrichtung nach Maßgabe der Abweichung der gemessenen Temperatur von einer Bezugstemperatur in einen Kühlmittelkreislauf eingegriffen wird, und zwar mit dem Ziel einer Konstanthaltung der Temperatur des Innenraums des Kessels.

In Abhängigkeit von der erfolgten Abkühlung des Innenraums des Kessels bzw. des Zentrifugenrotors ergeben sich jedoch eine Reihe von Problemen im Bereich des Elektroantriebes, die auf der thermischen Beeinflussung durch den kalten Rotorkörper und/oder Teile des Kessels zurückführbar sind. So hat die infolge Wärmeleitung und - strahlung erfolgte Abkühlung von Teilen des Motors eine Kondensatbildung zur Folge, die bedeutende Folgeschäden auslösen kann., so z. B. Korrosionserscheinungen im Bereich elektrischer Kontakte, ein korrosives Festsitzen des Loslagers der beiden Lagerungen der Motorwelle usw., so daß schließlich in Abhängigkeit vom Ausmaß der aufgetretenen Schäden mit Funktionsstörungen zu rechnen ist, die ihrerseits teure Instandsetzungsarbeiten nach sich ziehen.

Diese Probleme treten lediglich bei Stillstand des Zentifugenrotors auf, da bei laufendem Rotor infolge der Eigenerwärmung des Elektroantriebs und einer hinreichenden Durchlüftung auch bei tiefen Temperaturen des Zentrifugenrotors kein Kondensat anfällt.

Aus der Fundstelle US 5 631 509 ist es bekannt, einen Elektroantrieb mit thermostatgesteuerten Beheizungselementen auszurüsten, und zwar mit dem Ziel einer Beheizung dessen Wicklungssystems, nämlich zur Vermeidung von Kondensatbildung und der hiervon ausgehenden Folgeschäden. Der Thermostat ist derart eingerichtet, daß die Beheizungselemente nur beim Stillstand des Elektroantriebs wirksam werden können und daß eine Beheizung bis zum Erreichen eines minimalen, vorgegebenen Temperaturintervalls oberhalb der Umgebungstemperatur durchgeführt wird.

Aus der US 4 195 324 ist ein weiterer Elektroantrieb bekannt, der mit einer Zusatzbeheizung zur Vermeidung von Kondensatbildung ausgerüstet ist. Der Elektroantrieb beinhaltet einen Dreiphasenwechselstrommotor, dessen eine Phase zwecks Anhebung der Windungstemperatur über die Taupunkttemperatur der Umgebung elektrisch beaufschlagbar ist.

Wesensmerkmal dieser bekannten, mit einer Stillstandsheizung zur Unterdrückung von Kondensatbildung ausgerüsteten Elektroantriebe ist somit, daß die im Rahmen deren Stillstandsheizungen zu installierende Heizleistung lediglich an der Umgebungstemperatur zu orientieren ist. Eine durch den Einsatz der Elektroantriebe in einem Maschinenaggregat bedingte Unterkühlung und die hiermit verbundene Gefahr einer Kondensatbildung ist nicht Gegenstand dieser Fundstellen.

Die eingangs dargelegten Probleme treten lediglich bei Stillstand des Rotors der Laborzentrifuge auf, da bei laufendem Rotor infolge der Eigenerwärmung des Elektroantriebs und einer hinreichenden Durchlüftung auch bei tiefen Temperaturen des Zentrifugenrotors kein Kondensat anfällt.

Es ist die Aufgabe der Erfindung, eine Laborzentrifuge der eingangs bezeichneten Art vorzuschlagen, bei der in einfacher Weise ein Kondensatanfall innerhalb des Elektroantriebes bei Stillstand der Zentrifuge infolge einer prozeßbedingten Kühlung des Zentrifugenrotors unterdrückt wird und die hierdurch ansonsten entstehenden Folgeschäden vermieden werden können. Gelöst ist diese Aufgabe bei einer gattungsgemäßen Laborzentrifuge durch die Merkmale des Kennzeichnungsteils des Anspruchs 1.

Erfindungswesentlich ist hiernach eine Stillstandsheizung, welche ausschließlich bei Stillstand der Zentrifuge wirksam ist und vorzugsweise lediglich dann, wenn dem eigentlichen Zentrifugationsprozeß eine produktspezifische Abkühlung vorausgeht. Die über die Stillstandsheizung aufzubringende Heizleistung ist in jedem Fall dahingehend bemessen, daß an keiner Stelle innerhalb des Elektromotors eine Taupunktunterschreitung stattfindet, so daß eine, von einer Kühlung des Zentrifugenrotors ausgehende thermische Beeinflussung von Motorteilen in jedem Fall kompensiert wird. Die Stillstandsheizung muß diesen Anforderungen sowohl von der Heizleistung als auch von der flächenhaften bzw. räumlichen Wirkung her gerecht werden. Soweit sie diese Bedingungen erfüllt, kann jedes beliebige, hierzu geeignete, vorzugsweise elektrische Heizungssystem eingesetzt werden. Die Stillstandsheizung steht mit einer übergeordneten Steuerung in Wirkverbindung, durch welche sie automatisch aktivierbar ist, sobald die eingangs genannten Bedingungen anstehen, nämlich eine Abkühlung des Zentrifugenrotors bzw des Innenraumes des diesen aufnehmenden Kessels und ein Stillstand des Elektromotors.

Gemäß den Merkmalen des Anspruchs 2 ist die Stillstandsheizung nach Maßgabe einer festen Heizleistung ausgelegt, die dahingehend bemessen ist, daß auch unter ungünstigsten Bedingungen, das heißt tiefstmöglichen Temperaturen des Zentrifugenrotors eine ausreichende Beheizung des Motors mit Hinblick auf die eingangs dargelegte Zielsetzung gegeben ist. Beispielsweise kann in diesem Rahmen die Innenraumtemperatur des Motors bei etwa 60 °C gehalten werden und die Heizleistung zur Aufrechterhaltung dieser Temperatur hin ausgelegt sein.

Gemäß den Merkmalen des Anspruchs 3 ist die über die Stillstandsheizung installierte Leistung variabel ausgelegt, und zwar nach Maßgabe der Innentemperatur des Kessels oder eines sonstigen Temperaturmeßwertes, der die Abkühlung des Zentrifugenrotors zumindest angenähert beschreibt und von dem eine fühlbare Abkühlung von Motorteilen ausgeht. In diesem Fall ist die über die Stillstandsheizung aufgewandte Heizleistung der tatsächlich gegebebenen Abkühlung angepaßt.

Die Merkmale des Anspruchs 4 sind auf eine technische Realisierung des letztgenannten Konzeptes gerichtet und es ist hiernach ein Temperaturfühler zur Erfassung eines Temperaturmeßwertes des Kessels vorgesehen, der in einen Regelkreis eingebunden ist, über welchen die Heizleistung der Stillstandsheizung regelbar ist. Der Temperaturfühler kann hierbei beispielsweise die Temperatur der metallischen Kesselwandung erfassen, von der eine maßgebliche thermische Beeinflußung auch von Motorteilen ausgeht.

Gemäß den Merkmalen des Anspruchs 5 wird die Stillstandsheizung unmittelbar durch das Wicklungssystem des Stators und/oder des Rotors des Elektromotors gebildet. Dies bringt zunächst einmal den Vorteil mit sich, daß zur technischen Realisierung einer Stillstandsheizung kein zusätzliches Bauteil in die Struktur des Motors eingefügt werden muß. Es wird vielmehr von bereits vorhandenen Gegebenheiten Gebrauch gemacht. Das jeweilige Wicklungssystem bzw. die jeweiligen Wicklungssysteme werden elektrisch derart beaufschlagt, daß sich keine Drehbewegung sondern lediglich eine Erwärmung ergibt, die nach dem eingangs dargelegten Ziel bemessen ist, nämlich eine Taupunktunterschreiung innerhalb des Motors zu vermeiden. Dies kann durch eine Beaufschlagung des Wicklungssystems nach Maßgabe einer Eingangsspannung bzw einer Eingangsfrequenz erreicht werden, welche an diese Bedingungen angepaßt ist. Es ist dies unabhängig vom sonstigen elektri-schen Prinzip des Motors anwendbar, z. B. ob dieser als Gleichstrommotor, als Ein- oder Mehrphasenwechselstrommotor ausgebildet ist. Die Stillstandsheizung kann in einen Regelkreis eingeden sein, über welchen sie nach Maßgabe vor-gebbarer Bedingungen und einer vorgebbaren Heizleistung aktivierbar ist. Dieser Regelkreis kann in die ohnehin vorhandene Steuerung des Motors inte-griert sein, die eingangsseitig lediglich durch einen Temperaturmeßwert beauf-schlagt wird, der die Temperatur des Zentrifugenrotors bzw des genannten Kessels anzeigt. Auch bei der Regelung der Heizleistung kann auf diesem Wege weitestgehend von ohnehin vorhandenen Eingriffsmöglichkeiten eines Elektroantriebes Gebrauch gemacht werden, zu denen Spannungs- und Frequenzsteuerungen gehören, und zwar der Stator- als auch der Rotorwicklungssysteme. Dies bedeutet, daß herkömmliche Laborzentrifugen mit verhältnismäßig geringem Aufwand im Sinne des Erfindungsgegenstands umrüstbar sind.

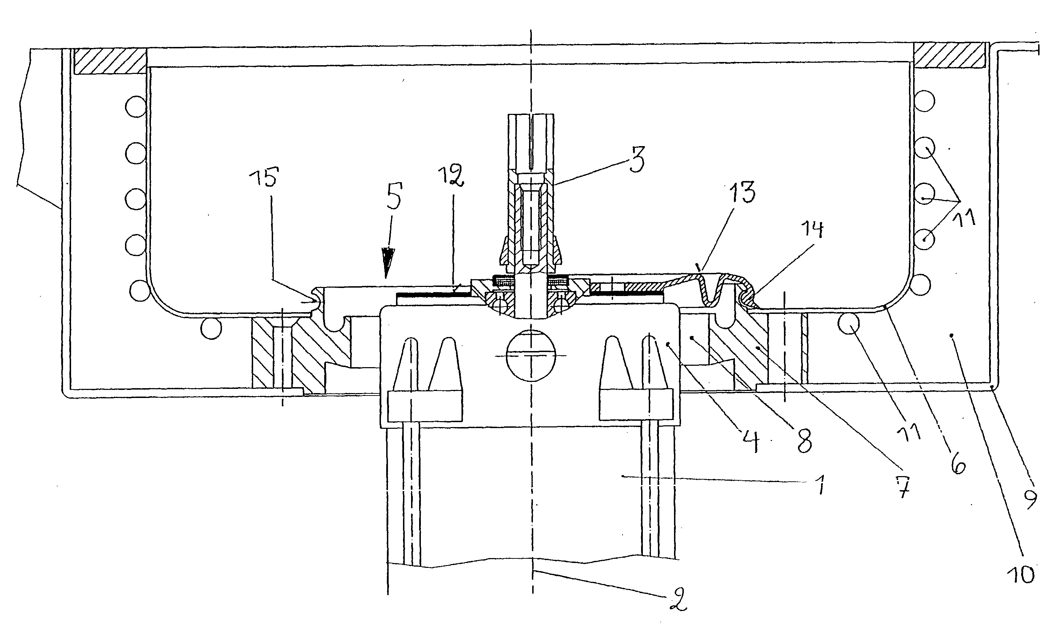

Die Erfindung wird im Folgenden unter Bezugnahme auf das in der Zeichnung wiedergegebene Ausführungsbeispiel näher erläutert werden.

Die Zeichnungsfigur zeigt im Längsschnitt und in einer Teildarstellung eine Laborzentrifuge, insbesondere deren Antriebsteil. Im einzelnen ist mit 1 ein Elektromotor bezeichnet, dessen vertikal orientierte Welle 2 an ihrem, aus dem dem Motor herausragenden freien Ende mit einem Kupplungsteil 3 versehen ist, welches zur Verbindung mit einem zeicherisch nicht dargestellten Zentrifugenrotor bestimmt und eingerichtet ist. Das Motorgehäuse, insbesondere dessen oberes, unter anderem einen Lagerdeckel umfassendes Teil 4 befindet sich innerhalb der bodenseitigen, konzentrisch zu der Welle 2 verlaufenden Öffnung 5 eines Kessels 6, der der Aufnahme des Zentrifugenrotors dient und der oberseitig durch einen zeichnerisch ebenfalls nicht dargestellten Deckel verschließbar ist. Die Öffnung 5 des Kessels 6 wird durch einen Ringkörper 7 eingefasst, der das genannte Teil 4 des Elektromotors 1 radial mit Abstand unter Belassung eines Ringspaltes 8 umgibt. Der Ringkörper 7 steht einerseits mit dem Kessel 6 und andererseits mit einer den Kessel 6 außenseitig mit Abstand, somit unter Belassung eines Hüllraumes 10 umgebenden Gehäusewandung 9 in Verbindung. Der Abstand zwischen der Gehäusewandung 9 und dem Kessel 6 kann durch diverse Einbauten mechanisch stabilisiert sein.

Innerhalb des Hüllraumes 10, und zwar in unmittelbarer Anlage an der Außenseite des Kessels 6 befindet sich ein System zur Führung eines Kühlmediums eingerichteter Lei-ungen 11, welche die Außenseite des Kessels 6 flächenhaft überdecken und mit dieser insbesondere in ausreichendem wärmeleitendem Kontakt stehen. Das System der Leitungen 11 ist in zeichnerisch nicht dargestellter Weise in einen Kreislauf eingebunden, der unter anderem eine Wärmesenke umfasst, um die über die Wandungen des Kessels 6 aufgenommene Wärme abzuführen. Zeichnerisch ebenfalls nicht dargestellt ist ein Regelsystem, welches beispielsweise die Temperatur der Kesselwandungen erfasst und zur Beeinflußung der über die Leitungen 11 geführten Wärme zwecks Einstellung einer definierten Innentemperatur des Kessels 6 bestimmt und eingerichtet ist.

Auf der Stirnseite 12 des Teils 4, dieses kesselraumseitig überdeckend ist eine aus einem beispielsweise gummielastischen Werkstoff bestehende Manschette 13 befestigt, welche insbesondere den Ringspalt 8 überdeckt und deren äußere Berandung mittels eines angeformten Wulstes 14 in einer sich konzentrisch zu der Welle 2 erstreckenden Ringnut 15 des Ringkörpers 7 festgelegt ist.

Die, mittels einer solchen Laborzentrifuge zu behandelden Stoffe befinden sich in zeichnerisch nicht dargestellten, in den eingangs genannten Zentrifugenrotor einsetzbaren Gefäßen. Häufig findet diese Behandlung in Abhängigkeit von den Eigenschaften dieser Stoffe unter gegenüber den Umgebungstemperaturen verminderten Temperaturen statt und es wird zu diesem Zweck mittels eines in den Leitungen 11 strömenden Kühlmediums zunächst eine produktspezifische Temperatur innerhalb des Kessels eingestellt, woraufhin die zentrifugative Behandlung beginnt. In Abhängigkeit von dem Ausmaß der Abkühlung der Wandungen des Kessels 6 sowie des Ringkörpers 7, welche insbesondere durch Wärmestrahlung eine entsprechende Abkühlung des Gehäuses des Elektromotors 1, insbesondere des Teiles 4 sowie mit diesem in unmittelbarem wärmeleitendem Kontakt stehender Elemente zur Folge hat, wird nunmehr das Wicklungssystem des Elektromotors 1 mit der Maßgabe elektrisch beaufschlagt, daß eine Beheizung des Innenraumes des Motors sowie der durch den Kessel 6 bzw den Ringkörper 7 thermisch beeinflußten Teile stattfindet, und zwar dahingehend, daß an keiner Stelle dieser Motorelemente eine Taupunktunterschreitung und damit eine Kondensatbildung eintritt.

In Abhängigkeit von dem System des Elektromotors 1 kann es sich hierbei um eine Beaufschlagung von Stator- und/oder Rotorwicklungen handeln und es ist eine solche Beheizung gleichermaßen bei Gleichstrom- und Drehstrom- bzw allgemein Mehrphasenwechselstromantrieben anwendbar. Die elektrische Beaufschlagung der Wicklungssysteme erfolgt in jedem Fall nach Maßgabe einer Spannung und einer Frequenz, die keine Drehbewegung des Motors zur Folge haben. Die zur Erfüllung dieser Bedingung notwendige Wahl der erforderlichen elektrischen Parameter ist dem Fachmann geläufig und bedarf keiner weiteren Erläuterung.

Im einfachsten Fall erfolgt die erfindungsgemäße Stillstandsbeheizung des Elektromotors 1 nach Maßgabe einer fest eingestellten Heizleistung, die unter Berücksichtigung ungünstigster Bedingungen, daß heißt einer maximalen Kühlleistung des über die Leitungen 11 strömenden Kühlmediums sich ergebender Verhältnisse eine Taupunktunterschreitung an den durch den Kesselraum thermisch beeinflußten Teilen des Motors vermeidet. Die Stillstandsbeheizung kann jedoch variabel in Abhängigkeit von der tatsächlich anstehenden thermischen Beeinflußung vorgenommem werden, und zwar mittels eines oder mehrerer Sensoren, der/die die Temperatur an der kritischen Stelle/den kritischen Stellen der thermisch beeinflußten Motorteile erfassen, wobei die aufzuwendende Heizleistung in Abhängigkeit von der auf diese Weise festgestellten Abkühlung bemessen wird.
Ein besonderer Vorteil der Erfindung ist darin zu sehen, daß zur Bereitstellung einer solchen Stillstandsheizung keine zusätzlichen Heizelemente innerhalb des Motors vorzusehen sind und vielmehr von bereits vorhandenen Strukturelementen Gebrauch gemacht wird, nämlich den Wicklungselementen des Rotors und/oder des Stators. Es ist jede Laborzentrifuge im erfindungsgemäßen Sinne in einfacher Weise und mit geringen Kosten ausrüstbar, denen der Vorteil gegenübersteht, daß kondensatbedingte Korrosionsschäden innerhalb des Motors vermieden werden, die sich ansonsten im Bereich elektrischer Kontakte, jedoch auch bei Lagerelementen bemerkbar machen und bedeutende Folgekosten nach sich ziehen würden.

## Patentansprüche

1. Laborzentrifuge mit einem, zumindest einen Elektromotor (1) umfassenden Antrieb, der mit einem Zentrifugenrotor in Verbindung steht, der seinerseits mit mehreren auswechselbar angeordneten, zur Aufnahme von durch Zentrifugation zu behandelnden Stoffen bestimmten Gefäßen ausgerüstet ist, wobei der Zentrifugenrotor in einem temperierbaren, unterseitig mit einer, zur Durchführung von Teilen des Antriebes bestimmten Öffnung (5) versehenen Kessel (6) aufgenommen ist,
**dadurch gekennzeichnet,**
- **daß** der Elektromotor (1) mit einer Stillstandheizung versehen ist, deren Heizleistung dahingehend bemessen ist, daß nach Maßgabe einer stoffspezifischen Kühltemperatur innerhalb des Kessels (6) an keiner Stelle innerhalb des Motors eine Taupunktunterschreitung stattfindet und
- **daß** die Stillstandheizung über eine Steuerung automatisch aktivierbar ist, und zwar in Abhängigkeit von der Abkühlung des Innenraumes des Kessels (6).

2. Laborzentrifuge nach Anspruch 1,
**dadurch gekennzeichnet,**
- **daß** die Stillstandheizung im Falle einer Kühlung des Innenraumes des Kessels (6) nach Maßgabe einer konstanten Heizleistung aktivierbar ist.

3. Laborzentrifuge nach Anspruch 1,
**dadurch gekennzeichnet,**
- **daß** die Stillstandheizung im Falle einer Kühlung des Innenraumes des Kessels (6) nach Maßgabe einer an die Innentemperatur des Kessels (6) angepaßten Heizleistung aktivierbar ist.

4. Laborzentrifuge nach Anspruch 1 oder 3,
**gekennzeichnet durch**
- einen Temperaturfühler zur Erfassung eines Temperaturmeßwertes des Kessels (6), der in einen Regelkreis zum Regeln der Heizleistung der Stillstandheizung eingebunden ist.

5. Laborzentrifuge nach einem der Ansprüche 1 bis 4,
**dadurch gekennzeichnet,**
- **daß** die Stillstandheizung durch das Wicklungssystem des Stators und/oder des Rotors des Elektromotors gebildet ist und
- **daß** die Stillstandheizung mit einer Regelungseinrichtung in Wirkverbindung steht, durch welche sie unter vorgebbaren Bedingungen und nach Maßgabe einer vorgebbaren Heizleistung aktiyierbar ist.

## Claims

1. Laboratory centrifuge comprising a drive means enclosing at least one electric motor (1), the drive means being connected to a centrifuge rotor which for its part is equipped with a plurality of exchangeable receptacles arranged to receive materials to be treated by centrifuging, wherein the centrifuge rotor is mounted in a bowl (6) which can be brought to the correct temperature and which is provided at the lower side with an aperture (5) arranged for parts of the drive means to extend therethrough, **characterised in that**
the electric motor (1) is provided with standstill heating means whose heating power is such that, depending upon a material-specific cooling temperature within the bowl (6), at no position within the motor does the temperature fall below the dew point, and the standstill heating means can be automatically activated by a control means, in dependence on the cooling of the internal chamber of the bowl (6).

2. Laboratory centrifuge according to claim 1, **characterised in that**
the standstill heating means can be activated in accordance with a constant heating power in the case of a cooling of the internal chamber of the bowl (6).

3. Laboratory centrifuge according to claim 1, **characterised in that**
the standstill heating means can be activated in accordance with a heating power matched to the internal temperature of the bowl (6) in the case of a cooling of the internal chamber of the bowl (6).

4. Laboratory centrifuge according to claim 1 or 3,
**characterised in that**
a temperature sensor for detecting a temperature value of the bowl (6) is connected into a control circuit for controlling the heating power of the standstill heating means.

5. Laboratory centrifuge according to one of claims 1 to 4,
**characterised in that**
the standstill heating is effected through the winding system of the stator and/or of the rotor of the electric motor and the standstill heating means is connected to a control device by means of which it can be activated under predeterminable conditions and in accordance with a predeterminable heating power.

## Revendications

1. Centrifugeuse de laboratoire comprenant un entraînement constitué d'au moins un moteur électrique (1) qui est relié à un rotor de centrifugeuse équipé de plusieurs récipients interchangeables destinés à recevoir les substances à centrifuger, dans laquelle le rotor de centrifugeuse est contenu dans une cuve (6) pouvant être amenée à température et pourvue dans sa paroi inférieure d'une ouverture (5) destinée au passage de parties de l'entraînement, **caractérisée en ce que** le moteur électrique (1) est pourvu d'un chauffage à l'arrêt dont la puissance de chauffe est telle qu'en fonction d'une température de refroidissement spécifique de la substance à l'intérieur de la cuve (6), la température ne peut être inférieure au point de rosée en aucun endroit à l'intérieur du moteur, et **en ce que** le chauffage à l'arrêt peut être automatiquement activé par une commande en fonction du refroidissement à l'intérieur de la cuve (6).

2. Centrifugeuse de laboratoire selon la revendication 1, **caractérisée en ce que** le chauffage à l'arrêt peut être activé en cas de refroidissement de l'intérieur de la cuve (6) en fonction d'une puissance de chauffe constante.

3. Centrifugeuse de laboratoire selon la revendication 1, **caractérisée en ce que** le chauffage à l'arrêt peut être activé en cas de refroidissement de l'intérieur de la cuve (6) en fonction d'une puissance de chauffe adaptable à la température à l'intérieur de la cuve (6).

4. Centrifugeuse de laboratoire selon la revendication 1 ou 3, **caractérisée en ce qu'**elle comporte une sonde de température destinée à capter une valeur de mesure de la température dans la cuve (6), qui est intégrée dans un circuit de régulation de la puissance de chauffe du chauffage à l'arrêt.

5. Centrifugeuse de laboratoire selon l'une ou l'ensemble des revendications 1 à 4, **caractérisée en ce que** le chauffage à l'arrêt est formé par l'enroulement du stator et/ou du rotor du moteur électrique et **en ce que** le chauffage d'arrêt coopère avec un dispositif de régulation par lequel il peut être activé dans des conditions pouvant être prédéterminées et en vue d'une puissance de chauffe pouvant être prédéterminée.
